# EUROPEAN PATENT APPLICATION

(11) **EP 2 487 960 A2**
(43) Date of publication of application: **15.08.2012**
(21) Application number: 10822264.7
(22) Date of filing: 08.10.2010
(51) Int. Cl.: H04W 40/02

(54) **PATH CONTROL MANAGEMENT SYSTEM AND PATH CONTROL METHOD USING SAME**

(30) Priority: 08.10.2009 KR 20090095767; 04.10.2010 KR 20100096478
(71) Applicant: Electronics and Telecommunications Research Institute, Daejeon-shi 305-350 (KR)
(72) Inventor: KIM, Ki Won, Daejeon 305-509 (KR); CHUNG, Hyung Seok, Daejeon 302-777 (KR); YOON, Seung Hyun, Daejeon 305-340 (KR); SONG, Ho Young, Daejeon 305-755 (KR); KWON, TaeHyun, Andong-si Gyeongsangbuk-do 760-757 (KR)
(74) Representative: Sieckmann, Dirk Christoph
(86) International application number: PCT/KR2010/006893
(87) International publication number: WO 2011/043619

(57) **Abstract**

A first path control management system of a first domain calculates a path in the first domain and transmits information of a connection node in the first domain to connect to a second domain to a second path control management system of the second domain. The second path control management system of the second domain calculates a path in the second domain and transmits a connection node of the second domain to connect to the first domain to the first path control management system. The first path control management system of the first domain and the second path control management system of the second domain receive information of connection nodes of the second domain and the first domain, respectively, thereby connecting a path between the first domain and the second domain.

## Description

### [Technical Field]

The present invention relates to a path control management system and a method of setting a path using the same.

### [Background Art]

A backbone network and a core network provide a path, and the path connects two network devices. A control method for connecting network device induces a permanent connection (PC), a switched connection (SC), and a soft permanent connection (SPC). The SC and SPC connection control methods use a signaling protocol of a control plane, and the PC connection control method uses a path control management system in a management plane. When using a signaling protocol of a control plane, a path can be automatically set within a network.

The backbone network and the core network use a PC connection control method of a management plane due to convenience of a manager and complexity of operation.

However, currently, with the advance of control planar technology such as a network device and routing, in a network that is formed with a device using control planar technology, use of a connection control method using a signaling protocol of a control plane is increasing.

Thereby, a mutual interlock should be performed between networks having different connection control methods, i.e., between a network of a management plane having no control plane of an automatic connection method and a network of a control plane, and a connection between a network of a management plane and a network of a control plane should be set for mutual interlock between the network of a management plane and the network of a control plane.

For connection control between networks having different connection control methods, a user manually directly transfers or inputs connection information to each network. Thereby, much time is required for setting a path between networks, and when a connection of many networks is controlled, a problem such as a service control error and mutual operation disagreement may occur due to increase in complexity of operation, and this causes increase of a sustain and maintenance cost.

Further, for mutual operation and interlock with a network of a control plane, a control plane function should be upgraded in a network device and a network having no control plane and thus there is a problem that a cost thereof and operation difficulty very much increase.

### [DISCLOSURE]

### [Technical Problem]

The present invention has been made in an effort to provide a path control management system and a method of setting a path using the same having advantages of reducing a time that is required for setting a path between networks or domains.

### [Technical Solution]

An exemplary embodiment of the present invention provides a method of setting a path in a first path control management system of a first domain. The method includes: receiving connection information from a user; transmitting, when a destination node exists in a second domain that is different from the first domain among connection information, information of a first connection node in the first domain to connect to the second domain to a second path control management system of the second domain; receiving information of a second connection node in the second domain to connect to the first domain from the second path control management system; and controlling a connection between the first connection node and the second connection node.

Another embodiment of the present invention provides a path control management system that manages a first domain. The path control management system includes a selection unit, a path calculator, and a path setting unit. The selection unit selects a connection control method for setting a path within the first domain. The path calculator calculates a path in the first domain using connection information from a user. The transmitting/receiving unit transmits information of a first connection node to connect to a second domain that is different from the first domain among paths in the first domain to a path control management system that manages the second domain and receives information of the second connection node to connect to the first domain among paths in the second domain from the path control management system of the second domain. The path setting unit sets the path in the first domain as the connection control method, receives a response by requesting path setting of the second domain to the path control management system of the second domain, and connects the first connection node and the second connection node.

Yet another embodiment of the present invention provides a method of setting a path in a path control management system of a first domain of a plurality of different domains. The method includes: calculating a path in the first domain using connection information that is received from a user; receiving, when a destination node exists in a second domain that is different from the first domain among the connection information, information of a path in the second domain and information of a connection node in the second domain to connect to the first domain from a path control management system of the second domain; setting a path in the first domain with reference to information of a path in the first domain and a path in the second domain; setting a connection to a connection node in the second domain by provisioning a connection node in the first domain to connect to a connection node in the second domain with reference to the path in the first domain; requesting path setting in the second domain to the path control management system in the second domain; and receiving a response to path setting in the second domain from the path control management system in the second domain.

### [Advantageous Effects]

According to an exemplary embodiment of the present invention, by transmitting/receiving information of a connection node between path control management systems without a passive input of a user, a time period that is required for setting a path between different networks or different domains can be reduced. Further, a problem such as a service control error and mutual operation disagreement according to increase in complexity of a network can be solved, and thus a sustain and maintenance cost can be reduced and network extension can be provided.

### [Description of the Drawings]

FIG. 1 is a diagram illustrating a connection control method of a permanent connection (PC) method.
FIG. 2 is a diagram illustrating a connection control method of a soft permanent connection (SPC) method.
FIG. 3 is a diagram illustrating an interlock structure between networks corresponding to an example to which the present invention is applied.
FIG. 4 is a diagram illustrating an interlock structure between domains corresponding to another example to which the present invention is applied.
FIGS. 5 to 7 are flowcharts illustrating a method of setting a path according to an exemplary embodiment of the present invention.
FIG. 8 is a flowchart illustrating a method in which a local PS sets a path in a local network.
FIG. 9 is a diagram illustrating an interface that is used for setting a path between networks.
FIG. 10 is a block diagram illustrating a path control management system according to an exemplary embodiment of the present invention.

### [Mode for Invention]

In the following detailed description, only certain exemplary embodiments of the present invention have been shown and described, simply by way of illustration. As those skilled in the art would realize, the described embodiments may be modified in various different ways, all without departing from the spirit or scope of the present invention. Accordingly, the drawings and description are to be regarded as illustrative in nature and not restrictive. Like reference numerals designate like elements throughout the specification.

In addition, in the entire specification, unless explicitly described to the contrary, the word "comprise" and variations such as "comprises" or "comprising" will be understood to imply the inclusion of stated elements but not the exclusion of any other elements.

First, terms that are related to a connection control method for setting a path in a communication network are defined.

An area in which a path control management system manages is referred to as a domain, a network node in which a path is started within a domain is referred to as an ingress node, and a network node in which a path terminates within a domain is referred to as an egress node. A path can be set with various methods of connection controls in a network within such a domain.

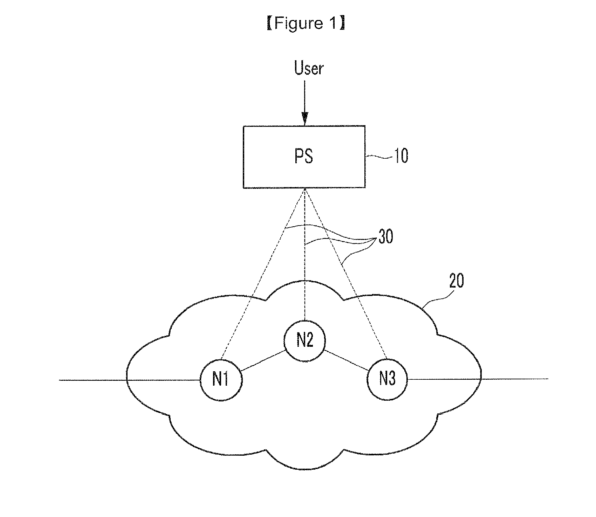

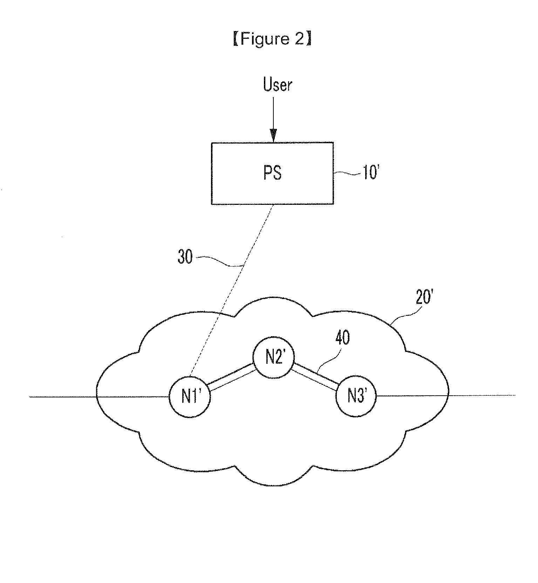

A connection control method for setting a path in a communication network will be described with reference to FIGS. 1 and 2.

FIG. 1 is a diagram illustrating a connection control method of a permanent connection (PC) method, and FIG. 2 is a diagram illustrating a connection control method of a soft permanent connection (SPC) method.

Referring to FIG. 1, a permanent connection (hereinafter, referred to as a "PC") is a method of setting a path in a network 20 using a provisioning system (hereinafter, referred to as a "PS") 10, which is a path control management system.

Specifically, the PS 10 receives a service connection request from a user. The service connection request includes connection setting input information such as a start node, a destination node, bandwidth, and a restriction item. Accordingly, the PS 10 calculates a path using connection setting input information. The PS 10 sets a path by provisioning network nodes that are included in the calculated path through a provisioning interface 30 with reference to the calculated path information. Here, provisioning includes a connection process or a connection release process to an adjacent network node.

Such a PC method can be used in the network 20 that is formed with network nodes N1-N3 of a management plane having no control plane.

Alternatively, referring to FIG. 2, soft permanent connection (hereinafter, referred to as "SPC") is a method of setting a path in a network 20' using a PS 10' and a signaling protocol 40 of a control plane.

Specifically, when a service connection request is received from a user, the PS 10' requests connection setting to an ingress node N1' corresponding to a start node based on connection setting input information of a service connection request. The ingress node N1', having received a request for connection setting requests path calculation to the PS 10'. Accordingly, the PS 10' calculates a path based on connection setting input information and transfers the calculated path information to the ingress node 10'. In this case, communication between the PS 10' and the ingress node N1' can be performed through a provisioning interface 30.

The ingress node N1', having received path information from the PS 10' sets a path with an adjacent intermediate network node N2' using a signaling protocol of a control plane, and the intermediate network node N2' also sets a path with an adjacent egress node N3' using a signaling protocol of a control plane. In this case, as a signaling protocol of a control plane, for example a resource reservation protocol (RSVP) and a resource reservation protocol-traffic engineering (RSVP-TE) that supports a traffic engineering function may be used.

Because such an SPC method uses a signaling protocol of a control plane, the SPC method can be used in a network 20' that is formed with network nodes N1'-N3' having a control plane. Further, a PC method can be used by a user even in such a network 20'. The network 20' that is formed with the network nodes N1'- N3' having a control plane includes, for example, a generalized multi-protocol label switching (GMPLS) network.

In this way, a communication network sets a path in a communication network using a PC method or an SPC method according to whether a control plane exists. However, there is a case of providing a service to a user through interlock of a communication network having different connection control methods, or a case of having the same connection control method, but providing a service to a user through interlock between different domains. In such a case, a user passively transfers or inputs connection information between networks to each network or each domain, thereby setting a connection between networks or domains. However, such a passive method requires much time for connection setting of a network node and aggravates complexity due to connection setting of network nodes when many connection networks exist, thereby increasing an operation cost.

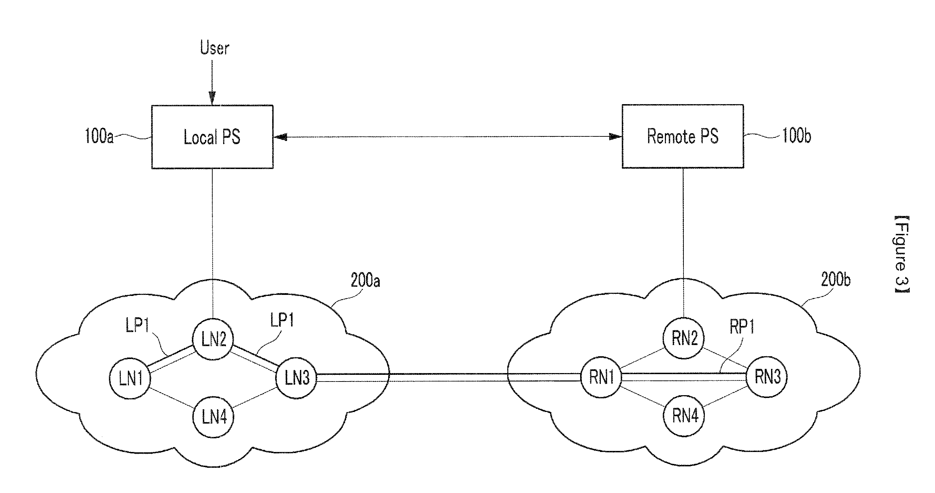

Hereinafter, a path setting method that can solve such a problem will be described in detail with reference to FIGS. 3 to 10.

Hereinafter, for convenience of description, a network that receives a service connection request from a user is referred to as a local network, and a network other than a local network is referred to as a remote network. A PS of the local network is referred to as a local PS, a PS of a remote network is referred to as a remote PS, network nodes of a local network are referred to as a local node, and network nodes of a remote network are referred to as a remote node. Further, an ingress node and an egress node in a local network among local nodes are referred to as a local ingress node and a local egress node, respectively, and an ingress node and an egress node in a remote network among remote nodes are referred to as a remote ingress node and a remote egress node, respectively.

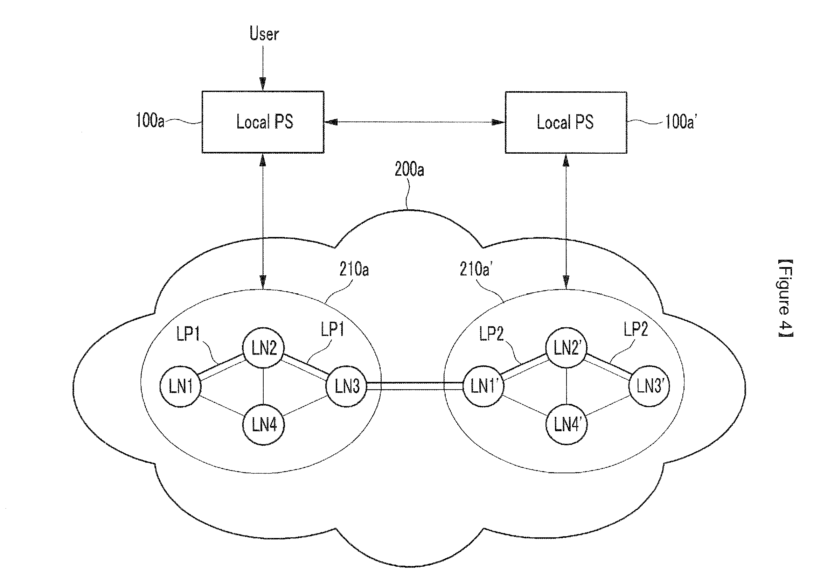

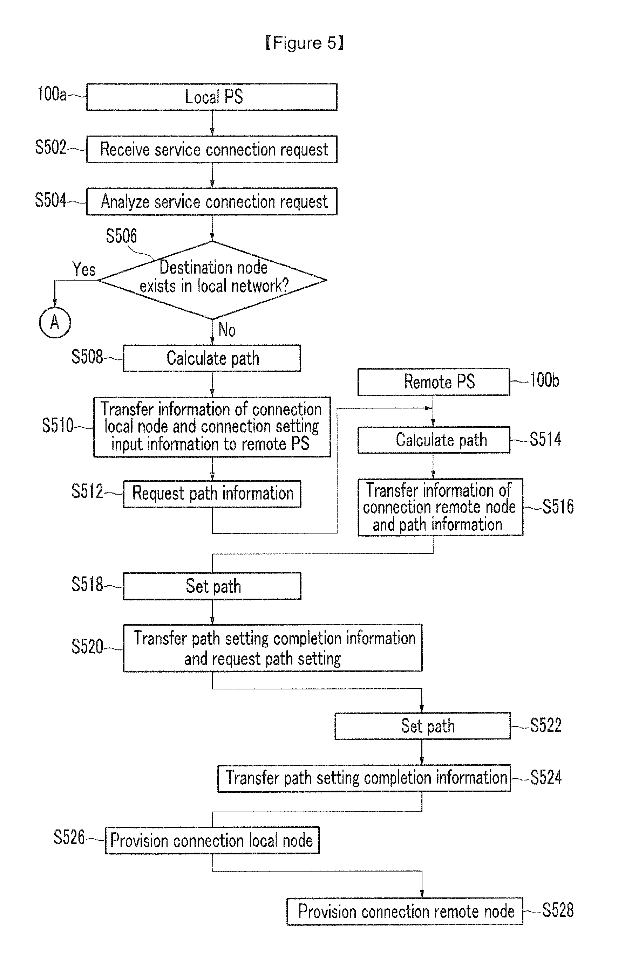

FIG. 3 is a diagram illustrating an interlock structure between networks corresponding to an example to which the present invention is applied, and FIG. 4 is a diagram illustrating an interlock structure between domains corresponding to another example to which the present invention is applied. FIGS. 5 to 7 are flowcharts illustrating a method of setting a path according to an exemplary embodiment of the present invention.

Referring to FIGS. 3 to 5, a local PS 100a receives a service connection request from a user (S502). The service connection request includes connection setting input information.

The local PS 100a extracts connection setting input information by analyzing a service connection request, thereby checking connection information, bandwidth, and a restriction item (S504). Here, the connection information includes a start node and a destination node.

The local PS 100a determines whether a destination node exists in a local network 200a (S506). If a destination node does not exist in a local network 200a, the local PS 100a determines that a destination node exists in a remote network 200b. For example, as shown in FIG. 3, when the local network 200a including local nodes LN1-LN4 and the remote network 200b including remote nodes RN1-RN4 exist, if a start node is LN1 and a destination node is RN3, the local PS 100a determines that a destination node exists in the remote network 200b.

First, the local PS 100a calculates a path in the local network 200a (S508).

Thereafter, the local PS 100a requests path information in the remote network 200b while transferring a local egress node in the local network 200a, i.e., information of a connection local node to connect to the remote network 200b and connection setting input information from a user to the remote PS 100b with reference to the calculated path information (S510 and S512). In FIG. 3, information of a connection local node may be LN3.

The remote PS 100b calculates a path in the remote network 200b using information of a connection local node and connection setting input information (S514).

Thereafter, the remote PS 100b checks a remote ingress node, i.e., a connection remote node, to connect to the local network 100a with reference to the calculated path information, and transfers information of the connection remote node and path information that is calculated in the remote network 200b to the local PS 100a (S516). In FIG. 3, information of the connection remote node may be RN1.

In FIG. 3, only one remote network 200b is illustrated, but a plurality of connectable remote networks may exist. In this way, when a plurality of remote networks exist, the local PS 100a can request path information to a remote PS of a plurality of remote networks. Further, when receiving information of a connection remote node and path information from a remote PS of a plurality of remote networks, the local PS 100a can determine one remote network and connection remote node to connect among a plurality of remote networks using the received information.

The local PS 100a sets a path in the local network 200a with reference to path information that is calculated in the local network 200a and path information that is calculated in the remote network 200b (S518). Thereafter, the local PS 100a requests path setting in the remote network 200b to the remote PS 100b while transferring path setting completion information in the local network 200a to the remote PS 100b (S520).

When the remote PS 100b receives a request for setting a path from the local PS 100a, the remote PS 100b sets a path with reference to path information that is calculated in the remote network 200b (S522) and transfers path setting completion information in the remote network 200b to the local PS 100 (S524).

The local PS 100a, having received the path setting completion information in the remote network 200b provisions a connection local node (S526), and the local PS 100a transfers a provisioning result of a connection local node to the remote PS 100b. Accordingly, the remote PS 100b provisions a connection remote node (S528) and transfers a provisioning result of a connection remote node to the local PS 100a. Thereby, a connection between a connection local node and a connection remote node can be set. Resultantly, path setting between two networks can be complete.

For example, as shown in FIG. 3, the local PS 100a may set a path LP1 in the local network 200a, and the remote PS 100b may set a path RP1 in the remote network 200b. In this case, information of a connection local node may be LN3, and information of a connection remote node may be RN1. After a path LP1 is set in the local network 200a and a path RP1 is set in the remote network 200b, by provisioning the connection local node LN3 and the connection remote node RN1, while the connection local node LN3 and the connection remote node RN1 are connected, path setting between two networks 200a and 200b can be complete.

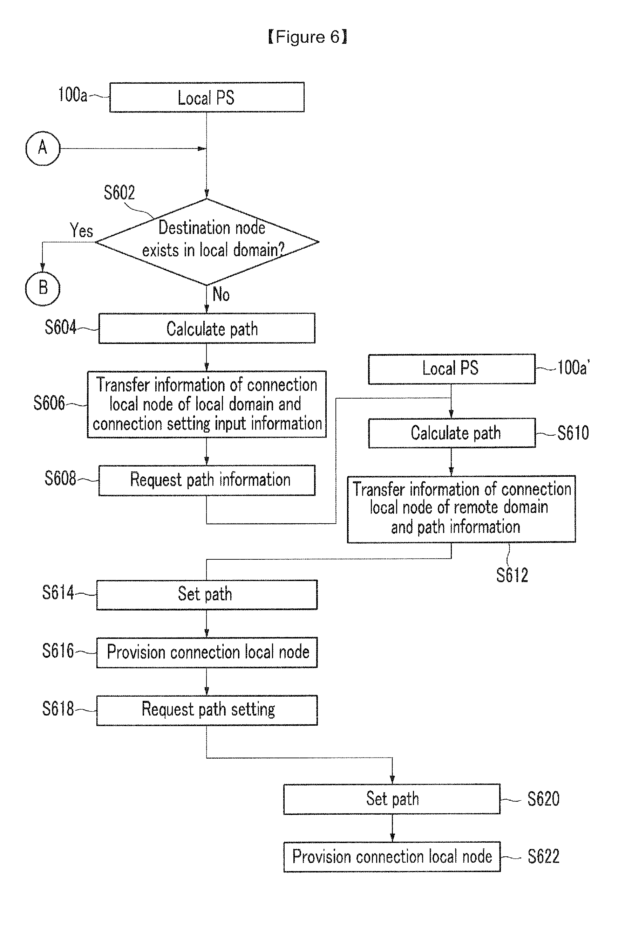

Referring to FIG. 6, when a destination node exists in the local network 200a, the local PS 100a determines whether a destination node exists in a domain (hereinafter, referred to as a "local domain") 210a in which the local PS 100a manages (S602).

For example, as shown in FIG. 4, when local nodes LN1-LN4 and LN1'-LN4' are included in the local network 200a, if a start node is LN1 and a destination node is LN3', the local PS 100a determines that the destination node exists in another domain (hereinafter, referred to as a "remote domain") 210a' other than a local domain. In this case, a path between two domains 210a and 210a' can be set using the same method as a method of setting a path between two networks, which is described with reference to FIGS. 3 and 4.

Specifically, the local PS 100a calculates a path in the local domain 210a (S604).

Thereafter, the local PS 100a requests path information in the remote domain 210a' while transferring information of a local egress node in the local domain 210a, i.e., a connection local node, to connect to the remote domain 210a', and connection setting input information from a user with reference to the calculated path information to the local PS 100a' that manages the remote domain 210a' (S606 and S608). In FIG. 4, information of a connection local node of the local domain 210a may be LN3.

The local PS 100a' calculates a path in the remote domain 210a' using information of a connection local node of the local domain 210a and connection setting input information (S610).

Thereafter, the local PS 100a' checks an ingress node of the remote domain 210a', i.e., a connection local node of the remote domain 210a', to connect to the local domain 210a with reference to the calculated path information, and transfers information of a connection local node of the remote domain 210a' and path information that is calculated in the remote domain 210a' to the local PS 100a (S612). In FIG. 4, information of a connection local node of the remote domain 210a' may be LN1'.

The local PS 100a sets a path in the local domain 210a with reference to path information that is calculated in the remote domain 210a' and path information that is calculated in the local domain 210a (S614), and transfers setting completion information of a path in the local domain 210a to the local PS 100a'.

Further, the local PS 100a provisions a connection local node of the local domain 210a using information of a connection local node of the remote domain 210a' (S616). The connection local node of the local domain 210a transfers provisioning result information to a connection local node of the remote domain 210a', and the local PS 100a simultaneously requests path setting in the remote domain 210a' to the local PS 100a' (S618).

When the local PS 100a' receives a request for setting a path from the local PS 100a, the local PS 100a' sets a path with reference to path information that is calculated in the remote domain 210a' (S620) and provisions a connection local node of the remote domain 210a' (S622).

Accordingly, the connection local node of the remote domain 210a' transfers provisioning result information to a connection local node of the local domain 210a, and the local PS 100a' transfers setting completion information of a path in the remote domain 210a' to the local PS 100a.

For example, as shown in FIG. 4, the local PS 100a may set a path LP1 in the local domain 210a, and the local PS 100a' may set a path LP2 in the remote domain 210a'. In this case, information of a connection local node of the local domain 210a may be LN3, and information of a connection local node of the remote domain 210a' may be LN1'. Therefore, two connection local nodes LN3 and LN1' can be connected by provisioning the connection local node LN3 and the connection local node LN1'.

That is, after the path LP1 is set in the local domain 210a and the path LP2 is set in the remote domain 210a', while the connection local node LN3 and the connection local node LN1' are connected by provisioning the connection local node LN3 and the connection local node LN1', path setting between two domains 210a and 210a' is complete.

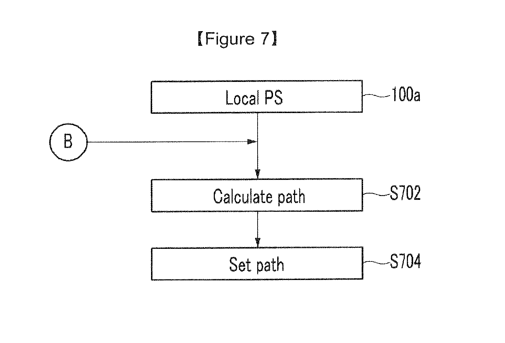

Referring to FIG.7, when a destination node exists within the local domain 210a, the local PS 100a calculates a path in the local network 200a (S702) and sets a path in the local network 200a with reference to information of the calculated path (S704).

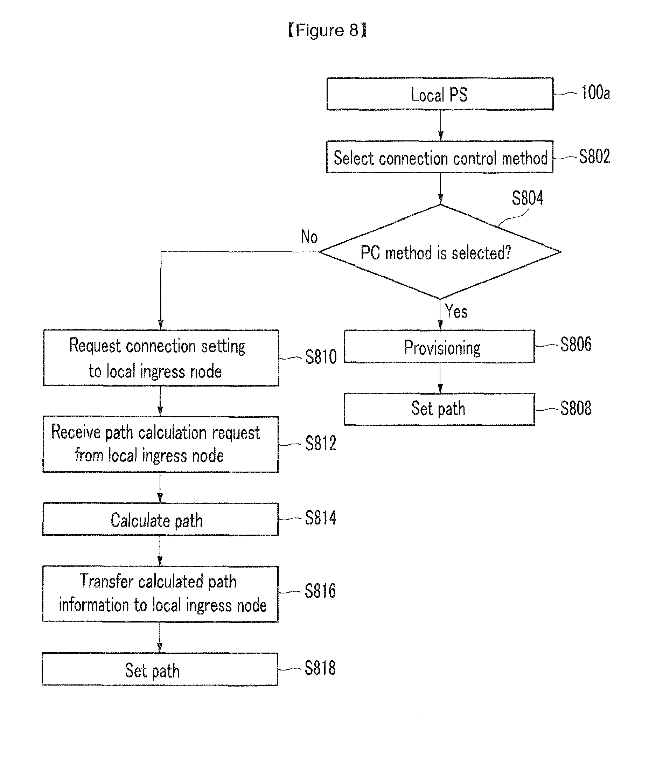

Next, a method of setting a path in networks 200a and 200b or domains 210a and 210a' will be described with reference to FIG. 8.

FIG. 8 is a flowchart illustrating a method in which a local PS sets a path in a local network. The method can be equally applied to a remote network or a remote domain.

Referring to FIG. 8, the local PS 100a selects a connection control method using connection setting input information from a user and information about whether a control plane exists in the local network 200a (S802). In this case, if a control plane does not exist in the local network 200a, the local PS 100a selects a PC method as a connection control method, and if a control plane exists in the local network 200a, the local PS 100a selects a PC method or an SPC method as a connection control method.

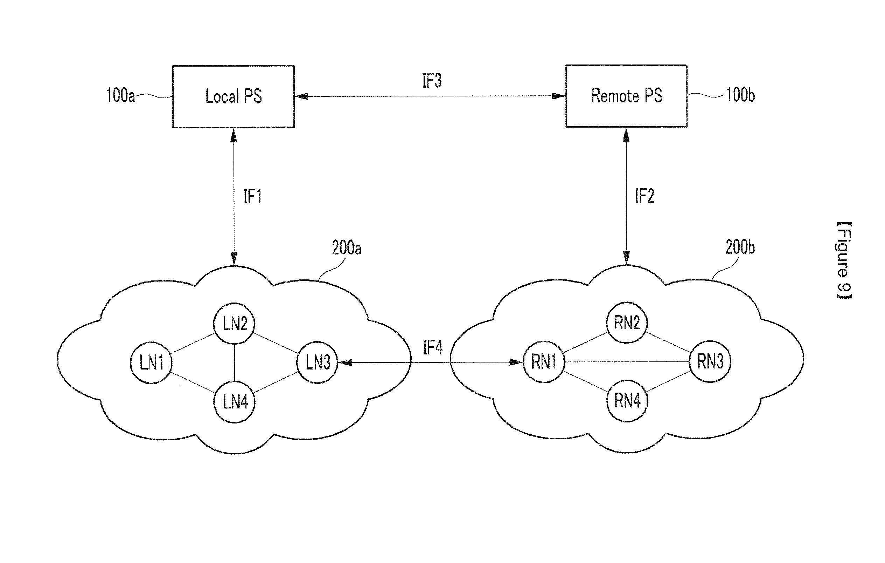

Referring to FIG. 9, if a PC method is selected as a connection control method (S804), as shown in FIG. 1, a path is set by provisioning a local node that is included in a calculated path (S806-S808).

If an SPC method is selected as a connection control method, as shown in FIG.2, the local PS 100a requests connection setting to a local ingress node (e.g., IN1 of FIG. 3) (S810), and the local ingress node requests a path calculation to the local PS 100a. That is, if an SPC method is selected as a connection control method, the local PS 100a receives a path calculation request from a local ingress node and calculates an optimum path (S812-S814). Step S814 corresponds to step S508 of FIG. 5.

The local PS 100a transfers the calculated path information to a local ingress node (S816). Accordingly, a local ingress node (e.g., LN1 of FIG. 3), a local node (e.g., IN2 of FIG. 3), and a local egress node (e.g., IN3 of FIG. 3) that are included in the calculated path each set a path using a signaling protocol of a control plane (S818).

In this way, according to an exemplary embodiment of the present invention, by transmitting/receiving termination information of a connection node through communication between PSs of different networks or between PSs of different domains, a path can be set between different networks or different domains even without a passive input of a user.

FIG. 9 is a diagram illustrating an interface that is used for setting a path between networks.

Referring to FIG. 9, an interface that is used for setting a path between the networks 200a and 200b includes an interface IF1/IF2 between a PS 100a/100b and network nodes LN1-LN4/RN1-RN4, an interface IF3 between the PSs 100a and 100b, and an interface IF4 between network nodes LN1-LN4 and RN1-RN4 between the networks 200a and 200b. For example, the interface IF1/IF2 between the PS 100a/100b and network nodes LN1-LN4 and RN1-RN4 may include a provisioning interface that is shown in FIG. 1.

Referring to a description of FIGS. 5 to 8, in an SPC method, a message that is exchanged between the PS 100a/100b and the network nodes LN1-LN4/RN1-RN4 through the interface IF1/IF2 between the PS 100a/100b and the network nodes LN1-LN4/RN1-RN4 includes a message in which the PS 100a/100b requests path setting to an ingress node (e.g., LN1/RN1) corresponding to a start node, a message that requests a path calculation from an ingress node to the PS 100a/100b, a message in which the PS 100a/100b transfers path information to an ingress node after the PS 100a/100b calculates a path, and a message including whether setting success or setting failure in which an ingress node transfers to the PS 100a/100b after a path is set.

Further, in a PC method, a message that is exchanged between the PS 100a/100b and the network nodes LN1-LN4/RN1-RN4 through the interface IF1/IF2 between the PS 100a/100b and the network nodes LN1-LN4/RN1-RN4 includes messages that are exchanged in order to provision a network node that is included in a path after the PS 100a/100b calculates the path.

A message that is exchanged through an interface IF3 between the PSs 100a and 100b includes a message that requests information of a path while the PS 100a transfers information of a connection local node to the PS 100b, a message that responds to the message, a message that transfers path setting completion information from the PS 100a to the PS 100b, and a message that transfers path setting completion information from the PS 100b to the PS 100a.

A message that is exchanged through an interface IF4 between the network nodes LN1-LN4/RN1-RN4 between the networks 200a and 200b includes a message in which a connection local node (e.g., LN3 of FIG. 3) in the network 200a requests path setting to a connection remote node (e.g., RN1 of FIG. 3) in the network 200b and a response message to path setting from a connection remote node (e.g., RN1 of FIG. 3) in the network 200b to a connection local node (e.g., LN3 of FIG. 3) in the network 200a.

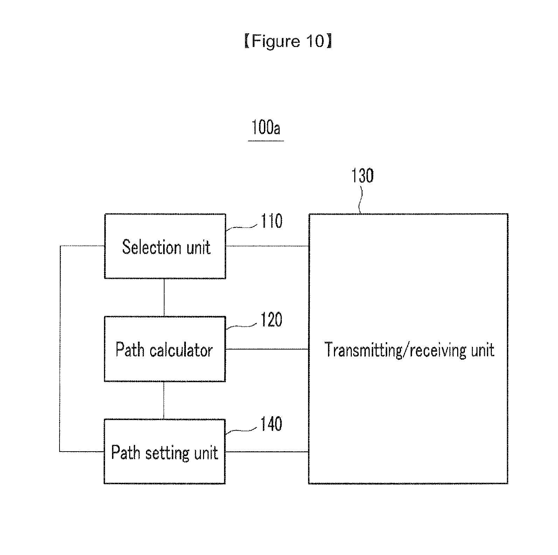

Next, a path control management system according to an exemplary embodiment of the present invention will be described in detail with reference to FIG. 10.

FIG. 10 is a block diagram illustrating a path control management system according to an exemplary embodiment of the present invention. In FIG. 10, for convenience of description, a path management system that is positioned at a local network will be described.

Referring to FIG. 10, a path control management system 100a includes a selection unit 110, a path calculator 120, a transmitting/receiving unit 130, and a path setting unit 140.

The selection unit 110 selects a connection control method for setting a path in a local domain in which the path control management system 100a manages. In this case, as described above, the selection unit 110 selects an SP method or an SPC method according to whether a local network has a control plane.

The path calculator 120 receives a service connection request from a user and calculates a path using connection setting input information of a service connection request. In the SPC method, the path calculator 120 receives a path calculation request from an ingress node of a local domain.

When a destination node of connection setting input information exists in another network or another domain, the transmitting/receiving unit 130 transmits information of a connection node of a local domain to connect to another network or another domain to a path control management system of another network or another domain, and receives information of a connection node of another network or another domain to connect to a local domain from a path control management system of another network or another domain.

Further, the transmitting/receiving unit 130 transmits information of a path that is calculated in a local domain to a path control management system of another network or another domain, and receives information of a path that is calculated in another network or another domain from a path control management system of another network or another domain.

The path setting unit 140 sets a path in a local domain using a connection control method that is selected by the selection unit 110. In this case, the path setting unit 140 can set a path in a local domain in consideration of information of a path that is calculated in another network or another domain.

Further, the path setting unit 140 controls a connection between a connection node of a local domain and a connection node of another network or another domain. That is, the path setting unit 140 provisions a connection node of a local domain.

An exemplary embodiment of the present invention may not only be embodied through the above-described system and/or method, but may also embodied through a program that executes a function corresponding to a configuration of the exemplary embodiment of the present invention or through a recording medium on which the program is recorded, and can be easily embodied by a person of ordinary skill in the art from a description of the foregoing exemplary embodiment.

While this invention has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims.

## Claims

1. A method of setting a path in a first path control management system of a first domain, the method comprising:
receiving connection information from a user;
transmitting, when a destination node exists in a second domain that is different from the first domain among connection information, information of a first connection node in the first domain to connect to the second domain to a second path control management system of the second domain;
receiving information of a second connection node in the second domain to connect to the first domain from the second path control management system; and
controlling a connection between the first connection node and the second connection node.

2. The method of claim 1, wherein the transmitting of information of a first connection node comprises
calculating a path in the first domain; and
checking the first connection node from the path.

3. The method of claim 2, wherein the controlling of a connection comprises:
selecting a connection control method using information on whether a control plane exists in the first domain; and
setting the path in the first domain as the connection control method.

4. The method of claim 3, wherein the selecting of the connection control method comprises selecting, if the control plane does not exist in the first domain, a permanent connection as the connection control method.

5. The method of claim 3, wherein the selecting of the connection control method comprises selecting, if the control plane exists in the first domain, a permanent connection or a soft permanent connection as the connection control method.

6. The method of claim 2, wherein the transmitting of information of the first connection node further comprises transmitting information of the path in the first domain to the second path control management system.

7. The method of claim 3, wherein the receiving of information of the second connection node comprises:
calculating, by the second path control management system, a path in the second domain; and
checking, by the second path control management system, the second connection node from a path in the second domain.

8. The method of claim 7, wherein the first connection node is a node in which the path is terminated in the first domain, and the second connection node is a node in which the path is started in the second domain.

9. The method of claim 8, wherein the receiving of information of a second connection node further comprises receiving information of the path in the second domain from the second path control management system, and
the setting of a path in the first domain comprises setting the path in the first domain using information of the path in the second domain.

10. The method of claim 8, wherein the controlling of a connection further comprises:
selecting, by the second path control management system, a connection control method using information on whether a control plane exists in the second domain; and
setting, by the second path control management system, the path in the second domain as the connection control method.

11. The method of claim 1, wherein a first network comprises the first domain, and a second network that is different from the first network comprises the second domain.

12. The method of claim 1, wherein the first domain and the second domain are included in the same network.

13. A path control management system that manages a first domain, comprising:
a selection unit that selects a connection control method for setting a path within the first domain;
a path calculator that calculates a path in the first domain using connection information from a user;
a transmitting/receiving unit that transmits information of a first connection node to connect to a second domain that is different from the first domain among paths in the first domain to a path control management system that manages the second domain and that receives information of the second connection node to connect to the first domain among paths in the second domain from the path control management system of the second domain; and
a path setting unit that sets the path in the first domain as the connection control method and that receives a response by requesting path setting of the second domain to the path control management system of the second domain and that connects the first connection node and the second connection node.

14. The path control management system of claim 13, wherein the transmitting/receiving unit receives information of the path in the second domain from the second path control management system, and
the path setting unit sets a path in the first domain using information of a path in the first domain and information of a path in the second domain.

15. The path control management system of claim 13, wherein the transmitting/receiving unit transmits information of a path in the first domain to the second path control management system, and
the path in the second domain is set in consideration of information of the path in the first domain by the request of the path setting.

16. The path control management system of claim 13, wherein the selection unit selects a permanent connection or a soft permanent connection as the connection control method when a control plane exists in the first domain, and selects a permanent connection as the connection control method when a control plane does not exist in the first domain.

17. The path control management system of claim 13, wherein a first network comprises the first domain, and a second network that is different from the first network comprises the second domain.

18. A method of setting a path in a path control management system of a first domain of a plurality of different domains, the method comprising:
calculating a path in the first domain using connection information that is received from a user;
receiving, when a destination node exists in a second domain that is different from the first domain among the connection information, information of a path in the second domain and information of a connection node in the second domain to connect to the first domain from a path control management system of the second domain;
setting a path in the first domain with reference to information of a path in the first domain and a path in the second domain;
setting a connection to a connection node in the second domain by provisioning a connection node in the first domain to connect to a connection node in the second domain with reference to the path in the first domain;
requesting path setting in the second domain to the path control management system in the second domain; and
receiving a response to path setting in the second domain from the path control management system in the second domain.

19. The method of claim 18, wherein a first network comprises the first domain, and a second network that is different from the first network comprises the second domain.

20. The method of claim 19, wherein the setting of the path comprises selecting a connection control method for setting the path.
